(19) Europäisches Patentamt
European Patent Office
Office européen des brevets

(11) **EP 3 495 408 A1**

(12) **EUROPEAN PATENT APPLICATION**
published in accordance with Art. 153(4) EPC

(43) Date of publication:
**12.06.2019 Bulletin 2019/24**

(51) Int Cl.:
*C08J 9/04* (2006.01)    *B60C 1/00* (2006.01)
*C08J 7/06* (2006.01)    *C08K 3/00* (2018.01)
*C08K 5/00* (2006.01)    *C08L 21/00* (2006.01)
*C08L 101/14* (2006.01)

(21) Application number: **17837038.3**

(22) Date of filing: **02.08.2017**

(86) International application number:
**PCT/JP2017/028136**

(87) International publication number:
**WO 2018/025936 (08.02.2018 Gazette 2018/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **02.08.2016   JP 2016152220**
**02.08.2016   JP 2016152218**

(71) Applicant: **Bridgestone Corporation**
**Tokyo 104-8340 (JP)**

(72) Inventors:
• **SHIONO Saaya**
  **Tokyo 104-8340 (JP)**
• **HASHIGUCHI Makoto**
  **Tokyo 104-8340 (JP)**
• **TODA Takumi**
  **Tokyo 104-8340 (JP)**

(74) Representative: **Oxley, Robin John George**
**Marks & Clerk LLP**
**15 Fetter Lane**
**London EC4A 1BW (GB)**

(54) **RUBBER MEMBER, METHOD FOR PRODUCING SAME, AND TIRE**

(57)    Provided is a rubber member that can, when used in a rubber article such as a tire, improve the on-ice performance of the rubber article. A first rubber member comprises a water thickening material, wherein a plurality of minute recesses are formed on a surface of the rubber member, the water thickening material is provided on an inner surface of one or more minute recesses of the plurality of minute recesses, an average coverage of the water thickening material on the inner surface of the one or more minute recesses is 10 % or more, and the water thickening material satisfies a condition that, when an aqueous dispersion is prepared with a concentration of the water thickening material being 23 mass%, a viscosity of the aqueous dispersion at 25 °C and any shearing velocity of 0.01/s to 0.1/s measured by a cone-plate viscometer is 20 Pa·s or more.

*FIG. 1*

EP 3 495 408 A1

**Description**

TECHNICAL FIELD

The present disclosure relates to a rubber member, a method for producing the same, and a tire.

BACKGROUND

Since studded tires were prohibited, various studies for improving the braking performance and the driving performance of tires on icy and snowy roads have been conducted. For example, JP 2014-227487 A (PTL 1) proposes improvement in performance such as on-ice performance required of studless tires while enhancing reinforcement by using: a modified natural rubber that is highly purified by removing non-rubber components and has a rubber component whose pH is adjusted to a predetermined range by treatment with an acidic compound and the like; and a filler such as carbon black.

CITATION LIST

Patent Literature

PTL 1: JP 2014-227487 A

SUMMARY

(Technical Problem)

However, the conventional technique mentioned above is intended to suppress a decrease in molecular weight during storage by adjusting the pH of the rubber component, and thus is limited in fundamentally improving the on-ice performance of tires.
It could therefore be helpful to provide a rubber member that can, when used in a rubber article such as a tire, improve the on-ice performance of the rubber article. It could also be helpful to provide a method for producing a rubber member that can improve the on-ice performance of a rubber article such as a tire. It could also be helpful to provide a tire with improved on-ice performance.

(Solution to Problem)

A first rubber member according to the present disclosure is a rubber member comprising a water thickening material, wherein a plurality of minute recesses are formed on a surface of the rubber member, the water thickening material is provided on an inner surface of one or more minute recesses of the plurality of minute recesses, an average coverage of the water thickening material on the inner surface of the one or more minute recesses is 10 % or more, and the water thickening material satisfies a condition that, when an aqueous dispersion is prepared with a concentration of the water thickening material being 23 mass%, a viscosity of the aqueous dispersion at 25 °C and any shearing velocity of 0.01/s to 0.1/s measured by a cone-plate viscometer is 20 Pa·s or more.
A second rubber member according to the present disclosure is a rubber member comprising a nanomaterial that has a major axis of less than 100 nm in the case of being non-fibrous or a minor axis length of less than 100 nm and a major axis length of less than 1000 nm in the case of being fibrous, wherein a plurality of minute recesses are formed on a surface of the rubber member, the nanomaterial is provided on an inner surface of one or more minute recesses of the plurality of minute recesses, and an average coverage of the nanomaterial on the inner surface of the one or more minute recesses is 10 % or more.
A method for producing a rubber member according to the present disclosure is a method for producing the rubber member described above, the method comprising providing the water thickening material or the nanomaterial in a minute recess formed on a surface of vulcanized rubber.
A tire according to the present disclosure is a tire comprising a tread including the rubber member described above.

(Advantageous Effect)

It is thus possible to provide a rubber member that can, when used in a rubber article such as a tire, improve the on-ice performance of the rubber article. It is also possible to provide a method for producing a rubber member that can improve the on-ice performance of a rubber article such as a tire. It is also possible to provide a tire with improved on-ice performance.

BRIEF DESCRIPTION OF THE DRAWINGS

In the accompanying drawings:

FIG. 1 is a schematic sectional view illustrating the vicinity of the surface of a tread of a tire as an embodiment of a rubber member according to the present disclosure;
FIG. 2 is a schematic sectional view illustrating the surface and inside of the tread of the tire as an embodiment of a rubber member according to the present disclosure;
FIG. 3 is a schematic view illustrating an image of the surface of a rubber member of a comparative example by SEM;
FIG. 4 is a schematic view illustrating an image of the surface of a rubber member according to one of the disclosed embodiments by SEM; and
FIG. 5 is a schematic view illustrating an image of the surface of a rubber member according to another one of the disclosed embodiments by SEM.

DETAILED DESCRIPTION

(Rubber member)

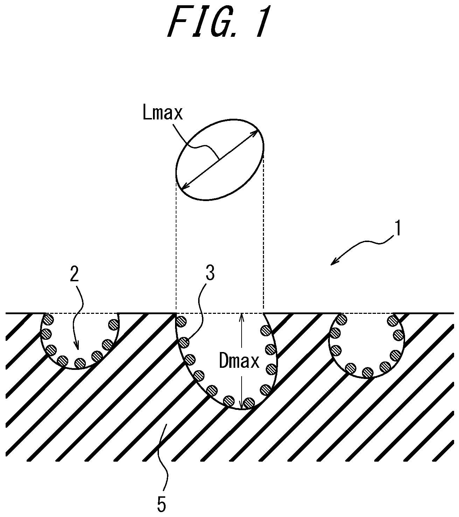

A rubber member according to the present disclosure will be described in detail below, by way of an embodiment.
A tread 1 of a tire as an embodiment of a rubber member according to the present disclosure illustrated in FIG. 1 can be produced using a rubber composition containing a rubber component and other optional components, and has a plurality of minute recesses 2 on its surface. A water thickening material 3 is provided on the inner surface of each of these minute recesses 2.
Herein, the "water thickening material" is a material satisfying the condition that, when an aqueous dispersion is prepared with the concentration of the water thickening material being 23 mass%, the viscosity of the aqueous dispersion at 25 °C and any shearing velocity of 0.01/s to 0.1/s measured by a cone-plate viscometer is 20 Pa·s or more.
In the case where the rubber member has a surface that cannot come into contact with any external factor such as a road surface during use, the "surface of the rubber member" does not include this surface that cannot come into contact with any external factor.
Typically, for example when a vehicle is running on an icy and snowy road, a water film forms due to, for example, frictional heat between the icy and snowy road and the tire. This water film decreases the coefficient of friction between the tire and the icy and snowy road, and degrades the on-ice performance. In view of this, the rubber member according to one of the disclosed embodiments has a plurality of minute recesses on its surface. These minute recesses function as drainage channels, so that the water film can be removed to suppress a decrease in the coefficient of friction between the tire and the icy and snowy road. In the rubber member according to one of the disclosed embodiments, not only the minute recesses are formed on the surface, but also a water thickening material is provided on the inner surfaces of the minute recesses. Hence, the surface roughness of the rubber member increases substantially, and also the water thickening material apparently disperses in water that has entered into the minute recesses to thus increase the viscosity of the water, as a result of which a decrease in the coefficient of friction (coefficient of static friction and coefficient of dynamic friction) can be further suppressed. This considerably improves the on-ice performance of the tire. In addition to this effect, the rubber member according to the present disclosure also has, for example, the following effects (1) to (3): (1) Because the rubber component is very hydrophobic, more water can be caused to enter into the minute recesses where the water thickening material is present. (2) The water thickening material breaks the water film, to enhance the function of the minute recesses as drainage channels. (3) The water thickening material that can come into contact with the icy and snowy road has a scratching effect.
Herein, the "minute recess" denotes a concavity portion on the surface of the rubber member, as illustrated in FIG. 1. Its maximum depth ($D_{max}$) is 1 $\mu$m to 500 $\mu$m, and its longest diameter ($L_{max}$) in a developed view of the surface of the rubber member is 1 $\mu$m to 500 $\mu$m. Thus, the minute recesses include recesses of various outer shapes. Whether or not minute recesses are present can be determined, for example, from a photograph of the surface of the rubber member taken using an electron microscope.
Herein, the term "provided" in expressions such as "the water thickening material is provided on the inner surface of a minute recess or the like" encompasses both a state in which the water thickening material is firmly fixed to the inner surface of the minute recess or the like and a state in which the water thickening material is not firmly fixed to the inner surface of the minute recess or the like. It is preferable that the water thickening material is not firmly fixed to the inner surface of the minute recess or the like.

Although the water thickening material 3 is provided on the inner surfaces of all minute recesses 2 illustrated in FIG. 1, this is not a limitation, and the rubber member according to one of the disclosed embodiments has the water thickening material provided on the inner surface of one or more minute recesses formed on its surface (hereafter also referred to as "ground contact target surface") that can come into contact with an external factor such as a road surface during use. In terms of sufficiently achieving the desired effects, the water thickening material is preferably provided on the inner surfaces of more minute recesses on the ground contact target surface, and more preferably provided on the inner surfaces of all minute recesses on the ground contact target surface.

The number of minute recesses on the surface of the rubber member according to one of the disclosed embodiments is not limited, and may be determined as appropriate depending on the purpose. In terms of effectively improving the on-ice performance of the tire or the like while maintaining rubber property, the number of minute recesses is preferably 70/mm$^2$ to 200/mm$^2$, and more preferably 130/mm$^2$ to 150/mm$^2$.

The number of minute recesses can be calculated by randomly selecting 10 square regions of 1 mm per side from a photograph of the surface of the rubber member taken using an electron microscope, counting the number of minute recesses observed in each region, and averaging the counted numbers.

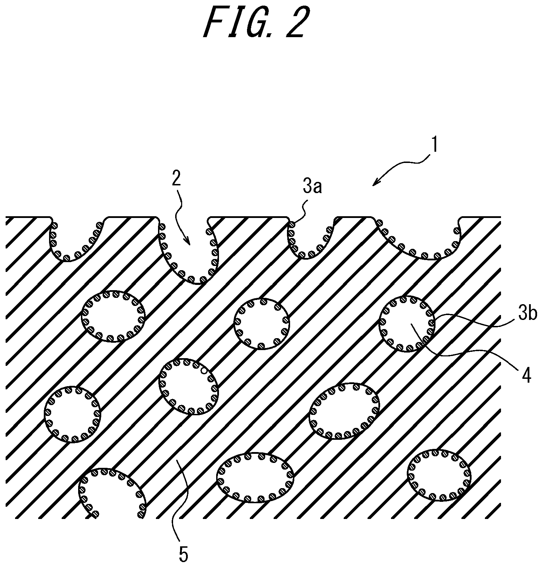

Preferably, the rubber member according to one of the disclosed embodiments not only has the plurality of minute recesses 2 on the surface but also has a plurality of minute cavities 4 inside, and a water thickening material 3a is provided on the inner surfaces of the minute recesses 2 and a water thickening material 3b is provided on the inner surfaces of the plurality of minute cavities 4, as in the tread 1 illustrated in FIG. 2 as an example. With such a configuration of the rubber member according to one of the disclosed embodiments, even if the surface wears due to long-term use and the minute recesses 2 are lost, the minute cavities 4 on the inside appear on the surface as new minute recesses at any time. These new minute recesses and the water thickening material provided on their inner surfaces function as drainage channels, and substantially enhance the surface roughness of the rubber member and increase the viscosity of entered water to suppress a decrease in the coefficient of friction. The rubber member according to one of the disclosed embodiments having the above-described configuration thus imparts high on-ice performance to the tire or the like over the long term.

In the rubber member according to one of the disclosed embodiments, the minute recesses and the minute cavities may communicate with each other.

The size of each minute cavity is not limited, but the length of the longest straight line connecting any two points on the inner surface is preferably 1 μm to 10 mm.

In the rubber member according to one of the disclosed embodiments in which the water thickening material is also provided on the inner surfaces of the minute cavities, the water thickening material may be present in parts other than the inner surfaces of the minute recesses 2 and the inner surfaces of the minute cavities 4, such as a non-cavity portion 5. In terms of efficiently improving the on-ice performance of the tire or the like without using the water thickening material excessively, the proportion of the water thickening material present in the non-cavity portion 5 is preferably lower. For example, such a rubber member can be suitably produced by using a rubber composition obtained by blending a rubber component with a foaming agent and water thickening material-containing organic fibers containing the water thickening material and a resin. In the rubber member produced using this rubber composition, the proportion of the water thickening material present in the non-cavity portion is approximately 0.

With regard to this, it might be necessary to discuss a preferred rubber member by determining the "proportion of the water thickening material present in the non-cavity portion to the total amount of the water thickening material in the rubber member". However, calculating the total amount of the water thickening material in the rubber member takes an excessively long time and is not practical. It is thus clear that directly determining the "proportion of the water thickening material present in the non-cavity portion to the total amount of the water thickening material in the rubber member" is technically impossible.

Preferably, in the rubber member according to one of the disclosed embodiments, a high proportion of the water thickening material is provided on the inner surfaces of the minute recesses 2. Such a rubber member that has a high proportion of the water thickening material provided on the inner surfaces of the minute recesses can considerably improve the on-ice performance of the tire or the like especially during initial use. As the method of providing a high proportion of the water thickening material on the inner surfaces of the minute recesses (i.e. increasing the proportion of the water thickening material provided on the inner surfaces of the minute recesses to the total amount of the water thickening material in the rubber member), for example, application, spray, or impregnation of the water thickening material may be used. The application, spray, or impregnation can be performed at any timing after vulcanizing the rubber composition to prepare vulcanized rubber having minute recesses, and also eases the control of the amount of the water thickening material provided on the inner surfaces of the minute recesses, so that the rubber member according to the present disclosure can be produced easily.

With regard to this, it might be necessary to discuss a preferred rubber member by determining the "proportion of the water thickening material provided on the inner surfaces of the minute recesses to the total amount of the water thickening material in the rubber member". However, calculating the total amount of the water thickening material in the rubber member takes an excessively long time and is not practical. It is thus clear that directly determining the "proportion of the water thickening material provided on the inner surfaces of the minute recesses to the total amount of the water thickening material in the rubber member" is technically impossible.

In the rubber member according to one of the disclosed embodiments, the amount of the water thickening material provided per the inner surface of one minute recess 2 needs to be a predetermined amount or more. More specifically, the average coverage of the water thickening material on the inner surfaces of the minute recesses on the surface of the rubber member needs to be 10 % or more, and is preferably 20 % or more, more preferably 25 % or more, further preferably 30 % or more, and particularly preferably 75 % or more. If the average coverage is less than 10 %, the on-ice performance of the tire or the like cannot be improved effectively.

From the same point of view, the average coverage on the inner surfaces of the minute recesses on the ground contact target surface of the rubber member is preferably 10 % or more, preferably 20 % or more, more preferably 25 % or more, further preferably 30 % or more, and particularly preferably 75 % or more.

Herein, the "average coverage of the water thickening material on the inner surfaces of the minute recesses" denotes the average value of the proportion of the total area covered by the water thickening material to the area of the minute recess in a developed view of the surface of the rubber member, for the minute recesses. For example, the "average coverage of the water thickening material on the inner surfaces of the minute recesses" can be calculated by randomly selecting 10 minute recesses from a photograph (preferably binarized) of the surface of the rubber member taken using an electron microscope and calculating the proportion of the total area covered by the water thickening material to the total area of the minute recesses.

In the rubber member according to one of the disclosed embodiments, a material not satisfying the foregoing condition of the water thickening material may be provided on the inner surfaces of the minute recesses. In terms of effectively improving the on-ice performance, however, a material not satisfying the condition of the water thickening material is preferably not provided on the inner surfaces of the minute recesses in the rubber member according to one of the disclosed embodiments.

- Water thickening material -

The water thickening material used in the present disclosure satisfies the condition that, when an aqueous dispersion is prepared with the concentration of the water thickening material being 23 mass%, the viscosity of the aqueous dispersion at 25 °C and any shearing velocity of 0.01/s to 0.1/s measured by a cone-plate viscometer is 20 Pa·s or more, as mentioned above. This water thickening material substantially enhances the surface roughness of the rubber member and increases the viscosity of entered water to suppress a decrease in the coefficient of friction, when provided on the inner surfaces of the minute recesses of the rubber member. In terms of further suppressing a decrease in the coefficient of friction, the viscosity relating to the water thickening material is preferably 500 Pa·s or more, more preferably 1000 Pa·s or more, further preferably 5000 Pa·s or more, and particularly preferably 8000 Pa·s or more. The viscosity relating to the water thickening material is preferably, but is not limited to, 50,000 Pa·s or less.

The measurement of the viscosity by the cone-plate viscometer can be performed using, for example, a cone with a diameter of 60 mm and an angle of 0.99°.

The form of the water thickening material is not limited as long as the viscosity of the aqueous dispersion is 20 Pa·s or more, and may be selected as appropriate depending on the purpose. Examples include fibrous, particulate, laminae, and tetrapod. It is important to select an appropriate form of the water thickening material according to the size of the minute recesses, based on the amount, size, etc. of the water thickening material.

The water thickening material may be gel-like.

Herein, "fibrous" denotes a form in which the aspect ratio measured by photographing using an electron microscope is more than 1, and "non-fibrous" denotes a form other than fibrous.

The size of the water thickening material is not limited as long as the viscosity of the aqueous dispersion is 20 Pa·s or more, and may be selected as appropriate depending on the purpose. For example, the major axis of the water thickening material is preferably 50 $\mu$m or less, and more preferably 1.0 $\mu$m or less. As a result of the major axis of the water thickening material being 50 $\mu$m or less, the water thickening material can, when provided in the minute recesses of the rubber member, increase the surface roughness of the rubber sufficiently and improve the on-ice performance of the tire effectively.

The water thickening material used in the present disclosure may have a nano-order size (nanomaterial). Specifically, in the case where the water thickening material is in a form (non-fibrous) other than fibrous, the major axis of the water thickening material is more preferably less than 100 nm. As a result of the major axis of the water thickening material being less than 100 nm, the water thickening material can, when provided in the minute recesses of the rubber member, increase the surface roughness of the rubber more sufficiently and improve the on-ice performance of the tire more effectively. In terms of effectively improving the on-ice performance and in terms of availability, the major axis of the water thickening material is preferably 1 nm to 80 nm, more preferably 1 nm to 60 nm, further preferably 1 nm to 20 nm, and particularly preferably 5 nm to 15 nm.

In the case where the water thickening material is fibrous, the water thickening material is more preferably a nanomaterial that has a minor axis length of less than 100 nm and a major axis length of less than 1000 nm. As a result of the minor axis length of the water thickening material being less than 100 nm and the major axis length of the water thickening material being less than 1000 nm, the water thickening material can, when provided in the minute recesses of the rubber member, increase the surface roughness of the rubber more sufficiently and improve the on-ice performance of the tire more effectively. From the same point of view, the minor axis length of the water thickening material is further preferably 50 nm or less, and the major axis length of the water thickening material is further preferably 800 nm or less. In terms of effectively improving the on-ice performance and in terms of availability, the major axis length of the water thickening material is more preferably 300 nm or more.

Herein, the "major axis" of the water thickening material is the term used in the case where the water thickening material is in a form (non-fibrous) other than fibrous, and denotes the length of the longest straight line connecting any two points on the outer surface of the water thickening material. The "major axis" of the water thickening material can be measured, for example, by photographing the water thickening material using an electron microscope.

Herein, the "minor axis length" and "major axis length" of the water thickening material are the terms used in the case where the water thickening material is fibrous, and can be measured, for example, by photographing the water thickening material using an electron microscope.

The water thickening material used in the present disclosure may be any of an organic material and an inorganic material.

The inorganic material is not limited, and may be selected as appropriate depending on the purpose. Examples include inorganic materials such as diamond, silica, glass, gypsum, calcite, fluorite, orthoclase, aluminum hydroxide, alumina, silver, iron, titanium dioxide, cerium oxide, zinc oxide, carbon black, single-walled carbon nanotubes, multi-walled carbon nanotubes, and clay. These inorganic materials may be used singly or in combination of two or more. Of these, inorganic materials whose Mohs hardness is not less than 3 which is typical Mohs hardness of ice, such as diamond, silica, glass, aluminum hydroxide, alumina, and titanium dioxide, are preferable. The use of a water thickening material whose Mohs hardness is not less than typical Mohs hardness of ice can enhance the scratching effect and the like, and thus considerably improve the on-ice performance of the tire or the like.

The surface of the inorganic material such as diamond may be modified with any functional group (e.g., hydroxyl group, carboxyl group, amino group, etc.).

The organic material is not limited, and may be selected as appropriate depending on the purpose. Examples include organic materials such as cellulose, aramid, nylon, and polymethyl methacrylate. In terms of enhancing the viscosity of water, the organic material may be an organic material for general purpose use as a polymer gel such as a water-retaining material or a water-absorbing polymer. These organic materials may be used singly or in combination of two or more.

The water thickening material preferably contains a hydroxyl group. As a result of the water thickening material containing a hydroxyl group, specific interaction between hydroxyl groups further enhances the viscosity of water entered into the minute recesses and further improves the on-ice performance of the rubber article. Examples of the hydroxyl group-containing water thickening material include cellulose and any inorganic material modified with a hydroxyl group.

The water thickening material is preferably insoluble in water (e.g. water at 25 °C), in terms of further ensuring the effect of removing the water film formed between the icy and snowy road and the tire.

- Nanomaterial -

In the rubber member according to the present disclosure, instead of the water thickening material described above, a nanomaterial that has a major axis of less than 100 nm in the case of being non-fibrous or a minor axis length of less than 100 nm and a major axis length of less than 1000 nm in the case of being fibrous may be used to achieve the same effects.

Preferable form, size, and material of the nanomaterial are the same as those of the water thickening material described above.

- Rubber component -

The rubber component is not limited, and may be selected as appropriate depending on the purpose. For example, natural rubber (NR) alone, diene-based synthetic rubber alone, or a combination of natural rubber and diene-based synthetic rubber may be used. The diene-based synthetic rubber is not limited, and may be selected as appropriate depending on the purpose. Examples of the diene-based synthetic rubber include butadiene rubber (BR), styrene-butadiene rubber (SBR), isoprene rubber (IR), chloroprene rubber (CR), ethylene-propylene-diene rubber (EPDM), acrylonitrile-butadiene rubber (NBR), and butyl rubber (IIR). These diene-based synthetic rubbers may be used singly or in combination of two or more.

(Method for producing rubber member)

The rubber member according to one of the disclosed embodiments can be produced using a rubber composition containing a rubber component and other optional components as described above. In the production of the rubber member according to one of the disclosed embodiments, it is at least necessary to form a plurality of minute recesses on the surface of the rubber member and provide a water thickening material or a nanomaterial on the inner surfaces of the minute recesses. The method for achieving these processes is not limited, and may be selected as appropriate depending on the purpose. A method for producing a rubber member according to the present disclosure at least includes a step of providing a water thickening material or a nanomaterial in minute recesses formed on the surface of vulcanized rubber. The method for producing a rubber member according to the present disclosure can produce the above-described rubber member according to the present disclosure. A method for producing a rubber member according to one of the disclosed embodiments including such a step will be described in detail below.

For example, the method for producing a rubber member according to one of the disclosed embodiments includes: a step of blending a rubber component with at least a foaming agent to prepare a rubber composition (rubber composition preparation A step); a step of vulcanizing the prepared rubber composition and scraping off the outer surface of the resultant vulcanized rubber (vulcanization A step); and a step of providing a water thickening material or a nanomaterial in minute recesses on the surface of the vulcanized rubber (water thickening material provision step).

- Rubber composition preparation A step -

The rubber composition preparation A step is a step of blending a rubber component with a foaming agent and other optional components and kneading them to obtain a rubber composition. Specific examples of the rubber component are the same as those described above. By adding the foaming agent, a plurality of minute recesses can be easily formed on the surface of the rubber member, and also a plurality of minute cavities can be easily formed inside the rubber member.

Examples of the foaming agent include dinitrosopentamethylenetetramine (DPT), azodicarbonamide (ADCA), dinitrosopentastyrenetetramine, benzenesulfonylhydrazide derivatives, p,p'-oxybisbenzenesulfonylhydrazide (OBSH), ammonium bicarbonate, sodium bicarbonate, ammonium carbonate, nitrososulfonylazo compounds, N,N'-dimethyl-N,N'-dinitrosophthalamide, toluenesulfonylhydrazide, p-toluenesulfonylsemicarbazide, and p,p'-oxybisbenzenesulfonylsemicarbazide. Of these, azodicarbonamide (ADCA) and dinitrosopentamethylenetetramine (DPT) are preferable in terms of workability. These foaming agents may be used singly or in combination of two or more. The blending amount of the foaming agent is not limited, and may be selected as appropriate depending on the purpose. The blending amount of the foaming agent is preferably in a range of 1 part to 10 parts by mass with respect to 100 parts by mass of the rubber component.

In the rubber composition preparation A step, a foaming aid is preferably used together with the foaming agent. Examples of the foaming aid include urea, stearic acid, zinc stearate, zinc benzenesulfinate, and zinc oxide. These foaming aids may be used singly or in combination of two or more. By using the foaming aid together with the foaming agent, foam reaction can be promoted to enhance the degree of completion of the reaction, thus suppressing unwanted degradation over time.

In the rubber composition preparation A step, the rubber component may be blended with other optional components. Examples include vulcanizing agents such as sulfur, vulcanizing co-agents such as stearic acid, vulcanization accelerators such as dibenzothiazyl disulfide and N-cyclohexyl-2-benzothiazolesulfenamide, vulcanization acceleration aids such as zinc oxide, age resistors, colorants, antistatic agents, dispersants, lubricants, antioxidants, softeners, and fillers such as carbon black and silica. These may be used singly or in combination of two or more.

The components described above are kneaded according to a conventional method to prepare the rubber composition.

- Vulcanization A step -

The vulcanization A step is a step of vulcanizing the rubber composition prepared in the rubber composition preparation A step to obtain vulcanized rubber and scraping off the outer surface of the vulcanized rubber. In the vulcanization A step, the blended foaming agent foams and generates gas, and the gas causes a plurality of minute cavities to be formed inside the vulcanized rubber and a plurality of minute recesses to be formed on the surface of the vulcanized rubber. Moreover, by scraping off the outer surface of the vulcanized rubber, a surface on which a plurality of minute recesses deriving from minute cavities mentioned above are formed can be obtained more effectively. The method of scraping off the outer surface of the vulcanized rubber is not limited.

7

The vulcanization method is not limited, and may be selected as appropriate depending on the type of the rubber component and the like. In the case where the resultant rubber member is used in a tire tread, it is preferable to perform mold vulcanization. The vulcanization temperature is not limited, and may be selected as appropriate depending on the vulcanization time and the like. In terms of achieving desired rubber property and foaming ratio, the vulcanization temperature is preferably 100 °C to 200 °C. The vulcanization time is not limited, and may be selected as appropriate depending on the vulcanization temperature and the like. In terms of achieving desired rubber property and foaming ratio, the vulcanization time is preferably 3 min to 25 min.

The foaming ratio (Vs) of the vulcanized rubber is preferably 3 % to 40 %, and more preferably 5 % to 35 %. As a result of the foaming ratio being 3 % or more, a decrease in drainage performance caused by an excessively low volume of minute recesses and minute cavities capable of removing water on the icy and snowy road can be suppressed. As a result of the foaming ratio being 40 % or less, a decrease in tire durability caused by an excessively large number of minute recesses and minute cavities can be suppressed.

The foaming ratio (Vs) (%) can be calculated according to the following Formula (I):

$$Vs = (\rho_o/\rho_1 - 1) \times 100 \quad ... \text{(I)}$$

[where $\rho_1$ is the density (g/cm$^3$) of the vulcanized rubber, and $\rho_0$ is the density (g/cm$^3$) of the solid phase portion in the vulcanized rubber].

- Water thickening material provision step -

The water thickening material provision step is a step of providing (subsequently) a water thickening material or a nanomaterial in the minute recesses formed on the surface of the vulcanized rubber obtained in the vulcanization A step, to obtain the rubber member according to the present disclosure. Specific examples of the water thickening material and the nanomaterial are the same as those described above.

The method of providing the water thickening material or the nanomaterial (hereafter also simply referred to as "water thickening material") is not limited, and may be selected as appropriate depending on the type of the water thickening material used and the like. Examples of the method include a method of applying the water thickening material manually or the like (application method), a method of spraying the water thickening material together with gas using a tool such as an airbrush (spray method), and a method of impregnating the vulcanized rubber with a liquid obtained by dispersing the water thickening material in a dispersion medium and then drying it (impregnation method). These methods are all preferable as compared with the case of providing the water thickening material by formulation, because the water thickening material can be provided easily on the inner surfaces of the minute recesses and the amount of the water thickening material provided on the inner surfaces of the minute recesses (the average coverage of the water thickening material on the inner surfaces of the minute recesses) can be controlled easily.

Examples of the tool usable in the spray method include airbrush "METEO" produced by Airtex Corporation, and airbrush "74541" produced by Tamiya, Inc. Examples of the gas usable in the spray method include air, nitrogen, oxygen, and propane. Of these, propane is preferable in terms of achieving favorable adhesion.

The dispersion medium usable in the impregnation method is not limited as long as it can be removed by drying. Examples include water, methanol, ethanol, and isopropanol. Of these, ethanol and isopropanol are preferable in terms of ensuring fast drying and safety. The concentration of the water thickening material in the liquid in the impregnation method is not limited, and may be selected as appropriate depending on the desired average coverage and the like. For example, the concentration of the water thickening material is preferably 0.01 mass% to 1.0 mass%. The drying temperature in the impregnation method is not limited, and may be selected as appropriate depending on the boiling point of the dispersion medium used and the like. For example, the drying temperature is preferably 10 °C to 200 °C. The drying time in the impregnation method is not limited, and may be selected as appropriate depending on the concentration of the water thickening material in the liquid and the like. For example, the drying time is preferably 10 min to 360 min.

In each of the application method, the spray method, and the impregnation method, the water thickening material can be provided on the surface of the rubber member other than the minute recesses. Such a water thickening material may or may not be removed.

As a method for producing a rubber member according to another one of the disclosed embodiments, a method combining the above-described "method for producing a rubber member according to one of the disclosed embodiments" and the below-described "another method for producing a rubber member", i.e. a method including the below-described fiber preparation step, rubber composition preparation B step, and vulcanization B step and the above-described water thickening material provision step, may be used.

The rubber member according to the present disclosure can also be produced by a method other than the above-described production method, such as a method (hereafter also referred to as "another method for producing a rubber member") including: a step of preparing water thickening material-containing organic fibers (fiber preparation step); a step of blending a rubber component with at least a foaming agent and the water thickening material-containing organic fibers to prepare a rubber composition (rubber composition preparation B step); and a step of vulcanizing the prepared rubber composition and scraping off the outer surface of the resultant vulcanized rubber (vulcanization B step). With this method, the water thickening material can be provided on the inner surfaces of the minute recesses by formulation.

- Fiber preparation step -

The fiber preparation step is a step of preparing water thickening material-containing organic fibers. The water thickening material-containing organic fibers are formulated in order to provide a water thickening material or a nanomaterial on the inner surfaces of the minute recesses and minute cavities of the rubber member. The water thickening material-containing organic fibers typically contain a resin and a water thickening material. Specific examples of the water thickening material and the nanomaterial are the same as those described above.

The melting point or softening point of the resin is preferably lower than the maximum temperature reached by the rubber composition during the vulcanization of the rubber composition, i.e. the maximum vulcanization temperature. In the case where the rubber composition containing the foaming agent contains the water thickening material-containing organic fibers, the resin included in the water thickening material-containing organic fibers melts or softens during the vulcanization, whereas gas generated from the foaming agent during the vulcanization in the rubber matrix tends to remain inside the melted or softened resin included in the fibers as compared with the rubber matrix for which vulcanization reaction has progressed. If the melting point or softening point of the resin is lower than the maximum vulcanization temperature, the resin melts or softens fast during the vulcanization of the rubber composition, with it being possible to form minute cavities efficiently.

Specific examples of such a resin include crystalline polymer resins, e.g. single composition polymers such as polyethylene (PE), polypropylene (PP), polybutylene, polybutylene succinate, polyethylene succinate, syndiotactic-1,2-polybutadiene (SPB), polyvinyl alcohol (PVA), and polyvinyl chloride (PVC), and polymers with a melting point controlled to an appropriate range by copolymerization, blending, or the like. These crystalline polymer resins may be used singly or in combination of two or more. Of these crystalline polymers, polyethylene (PE) and polypropylene (PP) are preferable in terms of versatility and availability, and polyethylene (PE) is more preferable in terms of having a relatively low melting point and being easy to handle. Meanwhile, in terms of attracting, into the minute recesses, more water whose viscosity is to be increased by the water thickening material, a hydroxyl group-containing resin such as polyvinyl alcohol is more preferable.

The melting point or softening point of the resin is preferably at least 10 °C lower than the maximum vulcanization temperature of the rubber composition, and more preferably at least 20 °C lower than the maximum vulcanization temperature of the rubber composition. A typical industrial vulcanization temperature of rubber compositions is about 190 °C at the maximum. For example, in the case where the maximum vulcanization temperature is set to 190 °C, the melting point or softening point of the resin is typically selected in a range of 190 °C or less, and is preferably 180 °C or less and more preferably 170 °C or less.

In the water thickening material-containing organic fibers, the content of the water thickening material or the nanomaterial is preferably 0.5 parts to 200 parts by mass with respect to 100 parts by mass of the resin. As a result of the content of the water thickening material or the nanomaterial being 0.5 parts by mass or more, the resultant rubber member can considerably improve the on-ice performance of the tire or the like. As a result of the content of the water thickening material or the nanomaterial being 200 parts by mass or less, high spinning efficiency can be maintained.

The average diameter of the water thickening material-containing organic fibers is preferably 10 $\mu$m to 100 $\mu$m. As a result of the average diameter being 10 $\mu$m or more, spinning from the resin and the water thickening material or the nanomaterial can be performed more reliably. As a result of the average diameter being 100 $\mu$m or less, an excessively high blending amount of the water thickening material-containing organic fibers in the rubber composition can be avoided.

The average length of the water thickening material-containing organic fibers is preferably 0.5 mm to 20 mm, and more preferably 1 mm to 10 mm. As a result of the average length being 0.5 mm or more, the minute recesses and the minute cavities can be formed more easily. As a result of the average length being 20 mm or less, sufficient kneading is possible without the hardness of the fibers being excessively high.

The preparation method for the water thickening material-containing organic fibers is not limited, and may be selected as appropriate depending on the purpose. Examples include melt spinning, gel spinning, and solution spinning. For example, in the melt spinning, after heating and melting the resin as raw material in an extruder, the water thickening material or the nanomaterial is dispersed, and then bundles of fibers extruded with a spinning nozzle are cooled by airflow to solidify while being extended in a spinning chimney. After this, oil is added to combine the fibers into one and wound. The water thickening material-containing organic fibers can thus be prepared. In the solution spinning, the water thickening material or the nanomaterial is dispersed in a polymer solution in which the resin as raw material is dissolved, and extruded with a spinning nozzle and subjected to desolvation and the like to be made fibrous. The water thickening material-containing organic fibers can thus be prepared.

- Rubber composition preparation B step -

The rubber composition preparation B step is a step of blending a rubber component with a foaming agent, the water thickening material-containing organic fibers prepared in the fiber preparation step, and other optional components and kneading them to obtain a rubber composition. Details of the rubber composition preparation B step are the same as those of the above-described rubber composition preparation A step, except the following points.

The blending amount of the water thickening material-containing organic fibers in the rubber composition preparation B step is not limited, and may be determined as appropriate depending on the purpose. The blending amount of the water thickening material-containing organic fibers is preferably 0.5 parts to 30 parts by mass with respect to 100 parts by mass of the rubber component. As a result of the blending amount of the water thickening material-containing organic fibers being 0.5 parts by mass or more, the volume ratio of the minute recesses and the minute cavities in the vulcanized rubber can be increased, and a sufficient amount of the water thickening material or the nanomaterial can be provided in the minute recesses and the minute cavities to efficiently improve the on-ice performance of the tire. As a result of the blending amount of the water thickening material-containing organic fibers being 30 parts by mass or less, a decrease in the dispersibility of the water thickening material-containing organic fibers in the rubber composition and the workability of the rubber composition can be suppressed.

- Vulcanization B step -

The vulcanization B step is a step of vulcanizing the rubber composition prepared in the rubber composition preparation B step to obtain vulcanized rubber and scraping off the outer surface of the vulcanized rubber to obtain the rubber member according to the present disclosure. In the vulcanization B step, as a result of vulcanization, the resin included in the water thickening material-containing organic fibers melts, and the blended foaming agent foams and generates gas. The melted resin and the water thickening material or the nanomaterial form a coating film so as to surround the gas, thus forming a plurality of minute cavities inside the vulcanized rubber and a plurality of minute recesses on the surface of the vulcanized rubber. In addition, due to gas inflow from the foaming agent, the total amount of the water thickening material or the nanomaterial included in the water thickening material-containing organic fibers moves to the inner surface of the coating film, that is, the surface formed by the melted resin. The water thickening material or the nanomaterial is thus provided (attached) on the inner surfaces of the minute cavities. By scraping off the outer surface of the vulcanized rubber, a surface on which a plurality of minute recesses deriving from minute cavities mentioned above are formed can be obtained more effectively. The method of scraping off the outer surface of the vulcanized rubber is not limited.

Details of the vulcanization B step are the same as those of the above-described vulcanization A step.

(Tire)

A tire according to the present disclosure includes a tread including the above-described rubber member. Such a tire has improved on-ice performance, because the above-described rubber member is used at least in the tread. The tire according to the present disclosure is therefore suitable for use as a studless tire and in particular a passenger vehicle studless tire. The tire according to the present disclosure is not limited as long as the above-described rubber member is used in the tread, and may be produced according to a conventional method.

EXAMPLES

The disclosed techniques will be described in more detail below using examples. Note that the present disclosure is not limited to these examples, and modifications can be made without departing from the scope of the present disclosure.

(Examples 1 to 12, Comparative Examples 1 to 10)

Each rubber composition was prepared according to a conventional method, with the formulation shown in Table 1. A tire tread (unvulcanized) was produced using the rubber composition, and placed in position to yield a raw tire. The raw tire was subjected to mold vulcanization at 165 °C for 20 min, to obtain a vulcanized tire.

The formulation selected in each example is shown in Table 4.

Table 1

|  | | Formulation A | Formulation B | Formulation C |
|---|---|---|---|---|
| Natural rubber | | 50 | 50 | 50 |
| Butadiene rubber *1 | | 50 | 50 | 50 |
| Carbon black *2 | | 20 | 20 | 20 |
| Silica *3 | | 35 | 35 | 35 |
| Process oil | | 10 | 30 | 10 |
| Silane coupling agent | | 3.5 | 3.5 | 3.5 |
| Stearic acid | | 2 | 2 | 2 |
| Zinc oxide | Parts by mass | 3.5 | 3.5 | 3.5 |
| Age resistor *4 | | 1 | 1 | 1 |
| Vulcanization accelerator A *5 | | 0.8 | 0.8 | 0.8 |
| Vulcanization accelerator B *6 | | 1 | 1 | 1 |
| Sulfur | | 1 | 1 | 1 |
| Foaming agent *7 | | 2.5 | 0 | 2.5 |
| Foaming aid *8 | | 2.5 | 0 | 2.5 |
| Minute material (a) (see Table 2 for specifications) | | 0 | 0 | 20 |

*1 produced by JSR Corporation, "BR01", cis-1,4-polybutadiene
*2 produced by Asahi Carbon Co., Ltd., "Carbon N220", agglomerates being 100 nm or more
*3 produced by Nippon Silica Industrial Co., Ltd., "Nipsil-VN3", agglomerates being 100 nm or more
*4 produced by Ouchi Shinko Chemical Industrial Co., Ltd., "NOCRAC 6C"
*5 dibenzothiazyl disulfide
*6 N-cyclohexyl-2-benzothiazolesulfenamide
*7 dinitrosopentamethylenetetramine
*8 urea

The vulcanized tire was then mounted on a passenger vehicle, the passenger vehicle was run 50 km or more to level the surface, and the outer surface of the tire was uniformly scraped off by a predetermined thickness. In each example other than Comparative Examples 1 and 2, the minute material shown in Table 2 was prepared, and provided on the inner surfaces of substantially all minute recesses on the ground contact target surface of the tread of the vulcanized tire by any of the methods shown in Table 3. A passenger vehicle radial tire of size 185/70R13 having a rubber member in its tread was thus produced.

The minute material and the method of providing the minute material selected in each example is shown in Table 4.

Table 2

| Minute material | (a) *10 | (b) *11 | (c) *12 | (d) *13 | (e) *14 |
|---|---|---|---|---|---|
| Material | Diamond (functional group-modified) | Silica | Silica | Glass (glass beads) | Glass (glass beads) |
| Mohs hardness | 10 | 9 | 9 | 5 | 5 |
| Form | Particulate | Particulate | Particulate | Particulate | P articulate |
| Major axis | 10 nm | 20 nm | 60 nm | 10 $\mu$m | 100 $\mu$m |
| Hydroxyl group | Contained | Not contained | Not contained | Not contained | Not contained |
| Solubility in water *15 | Insoluble | Insoluble | Insoluble | Insoluble | Insoluble |

(continued)

| Minute material | (a) *10 | (b) *11 | (c) *12 | (d) *13 | (e) *14 |
|---|---|---|---|---|---|
| Viscosity of aqueous dispersion [Pa·s]*16 | 9500 | 8000 | 6000 | 500 | 20 |

*10 produced by AR BROWN Co., Ltd., "udiamond molt"
*11 produced by Degussa AG., wet silica, VN3 grade
*12 produced by Degussa AG., wet silica, VN2 grade
*13 produced by Potters-Ballotini Co., Ltd., "EMB10"
*14 produced by Unitika Ltd., "UNIBEADS"
*15 solubility in water at 25 °C
*16 viscosity of aqueous dispersion prepared with concentration of target material being 23 mass%, at 25 °C and shearing velocity of 0.02/s measured by cone-plate viscometer (cone diameter: 60 mm, angle: 0.99°)

Table 3

| Method | Procedure |
|---|---|
| Application method | Minute material is applied manually without using dispersion medium |
| Spray method | Minute material dispersed in propane is sprayed using airbrush ("METEO" produced by Airtex Corporation) |
| Impregnation method | Aqueous dispersion in which minute material is dispersed (minute material concentration: 0.5mass%) is prepared, vulcanized rubber is impregnated with aqueous dispersion, and then dried at 60°C for 240 min to remove water. |

For each obtained tire, the foaming ratio (Vs) (%) of the vulcanized rubber forming the tread was calculated according to the following Formula (I). The results are shown in Table 4.

$$Vs = (\rho_0/\rho_1 - 1) \times 100 \quad \dots \text{(I)}$$

[where $\rho_1$ is the density (g/cm$^3$) of the vulcanized rubber, and $\rho_0$ is the density (g/cm$^3$) of the solid phase portion in the vulcanized rubber].

Moreover, for each obtained tire, the surface state and the inside state of the tread as the rubber member and the on-ice performance of the tire were evaluated by the following methods.

<Surface state and inside state of tread>

A rubber piece including the ground contact target surface was cut from the tread center portion of the obtained tire, and the surface and section of this sample were observed by a scanning electron microscope (SEM), to determine whether or not minute recesses were present on the ground contact target surface of the tread and whether or not minute cavities were present inside the tread.

Further, 10 minute recesses were randomly selected from a photograph of the ground contact target surface of the tread taken by the SEM, the proportion of the total area covered by the minute material to the total area of each minute recess was calculated, and the average coverage (%) of the minute material on the inner surfaces of the minute recesses was determined. The results are shown in Table 4.

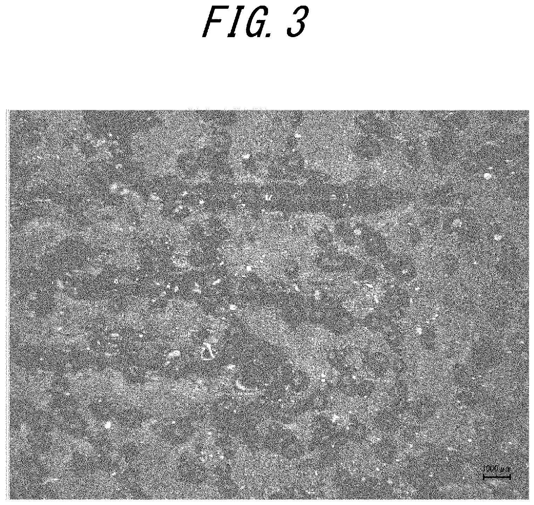

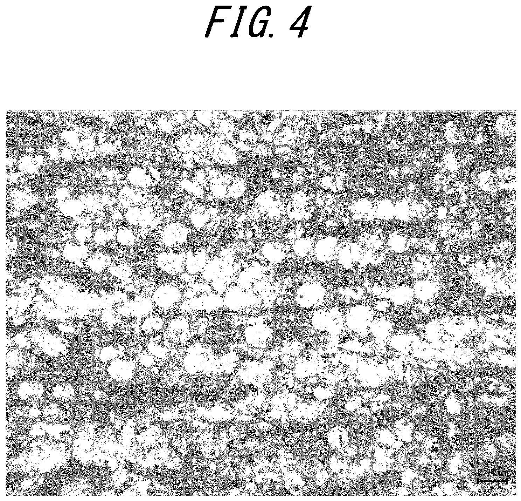

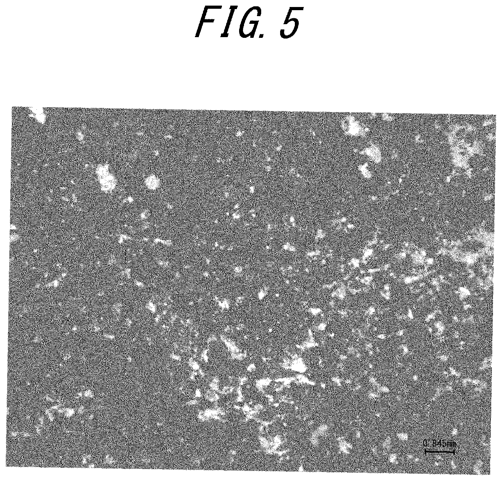

For reference, FIG. 3 schematically illustrates an image of the surface of the sample in Comparative Example 1 taken by the SEM, FIG. 4 schematically illustrates an image of the surface of the sample in Example 1 taken by the SEM, and FIG. 5 schematically illustrates an image of the surface of the sample in Example 11 taken by the SEM. As illustrated in these drawings, binarization processing reveals the average coverage of the minute material on the inner surfaces of the minute recesses.

<On-ice performance of tire>

A passenger vehicle having the obtained tire mounted thereon was run 200 km on an ordinary asphalt road, and then run on an icy flat road. When the speed was 20 km/h, the passenger vehicle was braked and the tire was locked, and the braking distance until the vehicle was stopped was measured. The result is represented by an index, with the inverse of the braking distance of the tire of Comparative Example 1 being set to 100. A higher index indicates better on-ice performance. The results are shown in Table 4.

Table 4

| | | | Comparative Example 1 | Comparative Example 2 | Example 1 | Example 2 | Example 3 | Example 4 | Comparative Example 3 | Comparative Example 4 | Comparative Example 5 | Comparative Example 6 | Example 5 |
|---|---|---|---|---|---|---|---|---|---|---|---|---|---|
| Rubber member | | Formulation of rubber composition | Formulation B | Formulation A | Formulation A | Formulation A | Formulation A | Formulation A | Formulation B | Formulation B | Formulation B | Formulation B | Formulation A |
| | Minute material | Type | - | - | (a) | (b) | (c) | (d) | (a) | (b) | (c) | (d) | (e) |
| | | Material | - | - | Diamond (functional group-modified) | Silica | Silica | Glass (glass beads) | Diamond (functional group-modified) | Silica | Silica | Glass (glass beads) | Diamond (functional group-modified) |
| | | Viscosity of aqueous dispersion [Pa·s]*16 | - | - | 9500 | 8000 | 6000 | 500 | 9500 | 8000 | 6000 | 500 | 9500 |
| | | Mayer axis | - | - | 10nm | 20nm | 60nm | 10μm | 10nm | 20nm | 60nm | 10μm | 10nm |
| | | Provision method | - | - | Application | Application | Application | Application | Application | Application | Application | Application | Spray |
| | Minute recesses | Presence of minute recesses | Not present | Present | Present | Present | Present | Present | Not present | Not present | Not present | Not present | Present |
| | Minute cavities | Presence of minute cavities | Not present | Present | Present | Present | Present | Present | Not present | Not present | Not present | Not present | Present |
| | | Average coverage of minute material on inner surfaces of minute recesses [%] | - | - | 100 | 90 | 80 | 10 | - | - | - | - | 100 |
| | | Foaming ratio [%] | 0 | 25 | 25 | 25 | 25 | 25 | 0 | 0 | 0 | 0 | 25 |
| Tire | | On-ice performance | 100 | 200 | 300 | 280 | 260 | 210 | 140 | 120 | 105 | 102 | 300 |

| | | | Example 6 | Example 7 | Example 8 | Example 9 | Comparative Example 7 | Example 10 | Example 11 | Example 12 | Comparative Example 8 | Comparative Example 9 | Comparative Example 10 |
|---|---|---|---|---|---|---|---|---|---|---|---|---|---|
| Rubber member | | Formulation of rubber composition | Formulation A | Formulation A | Formulation A | Formulation A | Formulation B | Formulation A | Formulation A | Formulation A | Formulation C | Formulation A | Formulation A |
| | Minute material | Type | (a) | (d) | (d) | (e) | (e) | (e) | (a) | (a) | (a) | (a) | (e) |
| | | Material | Diamond (functional group-modified) | Glass (glass beads) | Glass (glass beads) | Glass (glass beads) | Glass (glass beads) | Glass (glass beads) | Diamond (functional group-modified) | Diamond (functional group-modified) | Diamond (functional group-modified) | Diamond (functional group-modified) | Diamond (functional group-modified) |
| | | Viscosity of aqueous dispersion [Pa·s]*16 | 9500 | 500 | 500 | 20 | 20 | 20 | 9500 | 9500 | 9500 | 9500 | 9500 |
| | | Mayer axis | 10nm | 10μm | 10μm | 100μm | 100μm | 100μm | 10nm | 10nm | 10nm | 10nm | 10nm |
| | | Provision method | Impregnation | Spray | Impregnation | Application | Application | Spray | Application | Application | (blending during rubber composition preparation) | Application | Application |
| | Minute recesses | Presence of minute recesses | Present | Present | Present | Present | Not present | Present | Present | Present | Present | Present | Present |
| | Minute cavities | Presence of minute cavities | Present | Present | Present | Present | Not present | Present | Present | Present | Present | Present | Present |
| | | Average coverage of minute material on inner surfaces of minute recesses [%] | 100 | 100 | 100 | 100 | - | 100 | 30 | 10 | 0 | 2 | 5 |
| | | Foaming ratio [%] | 25 | 25 | 25 | 25 | 0 | 25 | 25 | 25 | 25 | 25 | 25 |
| Tire | | On-ice performance | 300 | 230 | 230 | 210 | 101 | 210 | 224 | 218 | 201 | 202 | 205 |

(Examples 13 to 24, Comparative Examples 11 and 12)

First, the resin shown in Table 5 and the minute material shown in Table 2 were prepared.

Table 5

|  | Resin (a) | Resin (b) |
|---|---|---|
| Material of resin | Polyethylene *17 | Polyvinyl alcohol *18 |
| Melting point or softening point [°C] | 135 | 120 |
| Hardness [degrees]*19 | 44 | 73 |

*17 produced by Japan polyethylene Corporation, "HY 442"
*18 produced by Kuraray Co., Ltd., "KURALON K-11"
*19 measurement of durometer D hardness in accordance with JIS K 7215

Using the resin and the minute material prepared as described above, fibers (minute material-containing fibers) were prepared according to typical melt spinning with the formulation shown in Table 6. For the prepared fibers, 20 locations were randomly selected, and the diameters and the lengths were measured using an optical microscope and averaged. All fibers had an average diameter of 30 μm and an average length of 2 mm.
The fibers selected in each example are shown in Table 8.

Table 6

| Fibers | A | B | C | D | E | F | G |
|---|---|---|---|---|---|---|---|
| Selected resin | Resin (a) | Resin (b) | Resin (a) | Resin (a) | Resin (a) | Resin (a) | Resin (b) |
| Selected minute material | None | None | Minute material (a) | Minute material (b) | Minute material (c) | Minute material (d) | Minute material (d) |
| Content of minute material [parts by mass/100 parts by mass of resin] | - | - | 10 | 10 | 10 | 10 | 10 |
| Fibers | H | I | J | K | L | M | N |
| Selected resin | Resin (b) | Resin (b) | Resin (b) | Resin (b) | Resin (b) | Resin (b) | Resin (b) |
| Selected minute material | Minute material (a) | Minute material (b) | Minute material (c) | Minute material (a) | Minute material (b) | Minute material (c) | Minute material (d) |
| Content of minute material [parts by mass/100 parts by mass of resin] | 15 | 15 | 15 | 10 | 10 | 10 | 15 |

Using the fibers prepared as described above, kneading was performed according to a conventional method with the formulation shown in Table 7, to prepare a rubber composition in which the blended fibers were arranged in a predetermined direction. A tire tread (unvulcanized) was then produced using the rubber composition, and placed in position to yield a raw tire. The raw tire was subjected to mold vulcanization at 165 °C for 10 min, to obtain a vulcanized tire. The maximum vulcanization temperature of each rubber composition during vulcanization was 165 °C.

Table 7

|  |  | Formulation |
|---|---|---|
| Natural rubber | | 30 |
| Butadiene rubber *1 | | 70 |
| Fibers *20 | | 5 |
| Carbon black *2 | | 20 |
| Silica *3 | | 35 |
| Process oil | Parts by mass | 10 |
| Stearic acid | | 2 |
| Zinc oxide | | 3.5 |
| Age resistor *4 | | 1 |
| Vulcanization accelerator A *5 | | 0.8 |
| Vulcanization accelerator B *6 | | 1 |
| Sulfur | | 1 |

(continued)

|  |  | Formulation |
|---|---|---|
| Foaming agent *7 |  | 2.5 |
| Foaming aid *8 |  | 2.5 |
| *20 selected from fibers shown in Table 6 | | |

The vulcanized tire was then mounted on a passenger vehicle, the passenger vehicle was run 50 km to level the surface, and the outer surface of the tire was uniformly scraped off by a predetermined thickness. A passenger vehicle radial tire of size 185/70R13 having a rubber member in its tread was thus produced.

For the obtained tire, the foaming ratio (Vs) (%) of the vulcanized rubber forming the tread was calculated, whether or not minute recesses were present on the ground contact target surface of the tread and whether or not minute cavities were present inside the tread were determined, the average coverage (%) of the minute material on the inner surfaces of the minute recesses was calculated, and the on-ice performance of the tire was evaluated by the same methods as above.

The results are shown in Table 8.

Table 8

| Rubber member | | | | | Comparative Example 11 | Comparative Example 12 | Example 13 | Example 14 | Example 15 | Example 16 | Example 17 |
|---|---|---|---|---|---|---|---|---|---|---|---|
| Rubber member | Fibers (minute material-containing organic fibers) | | Type | | A | B | C | D | E | F | G |
| | | Minute material | Type | | - | - | (a) | (b) | (c) | (d) | (d) |
| | | | Material | | - | - | Diamond (functional group-modified) | Silica | Silica | Glass (glass beads) | Glass (glass beads) |
| | | | Viscosity of aqueous dispersion [Pa·s]*16 | | - | - | 9500 | 8000 | 6000 | 500 | 500 |
| | | | Major axis | | - | - | 10nm | 20nm | 60nm | 10μm | 10μm |
| | Minute recesses | Presence of minute recesses | | | Present | Present | Present | Present | Present | Present | Present |
| | Minute cavities | Presence of minute cavities | | | Present | Present | Present | Present | Present | Present | Present |
| | Average coverage of minute material on inner surfaces of minute recesses [%] | | | | 0 | 0 | 21 | 19 | 20 | 15 | 20 |
| | Foaming ratio [%] | | | | 25 | 27 | 26 | 25 | 26 | 26 | 28 |
| Tire | On-ice performance | | | | 210 | 214 | 230 | 227 | 225 | 218 | 223 |

| Rubber member | | | | | Example 18 | Example 19 | Example 20 | Example 21 | Example 22 | Example 23 | Example 24 |
|---|---|---|---|---|---|---|---|---|---|---|---|
| Rubber member | Fibers (minute material-containing organic fibers) | | Type | | H | I | J | K | L | M | N |
| | | Minute material | Type | | (a) | (b) | (c) | (a) | (b) | (c) | (d) |
| | | | Material | | Diamond (functional group-modified) | Silica | Silica | Diamond (functional group-modified) | Silica | Silica | Glass (glass beads) |
| | | | Viscosity of aqueous dispersion [Pa·s]*16 | | 9500 | 8000 | 6000 | 9800 | 8000 | 6000 | 500 |
| | | | Major axis | | 10nm | 20nm | 60nm | 10nm | 20nm | 60nm | 10μm |
| | Minute recesses | Presence of minute recesses | | | Present | Present | Present | Present | Present | Present | Present |
| | Minute cavities | Presence of minute cavities | | | Present | Present | Present | Present | Present | Present | Present |
| | Average coverage of minute material on inner surfaces of minute recesses [%] | | | | 30 | 25 | 23 | 100 | 100 | 100 | 100 |
| | Foaming ratio [%] | | | | 26 | 28 | 27 | 25 | 26 | 27 | 26 |
| Tire | On-ice performance | | | | 247 | 234 | 230 | 240 | 230 | 226 | 222 |

Tables 4 and 8 demonstrate at least that the rubber member of each Example having a plurality of minute recesses, having a water thickening material provided on the inner surfaces of the minute recesses, and having an average coverage of 10 % or more can improve the on-ice performance of the tire as an example of the rubber article.

INDUSTRIAL APPLICABILITY

It is thus possible to provide a rubber member that can, when used in a rubber article such as a tire, improve the on-ice performance of the rubber article. It is also possible to provide a method for producing a rubber member that can improve the on-ice performance of a rubber article such as a tire. It is also possible to provide a tire with improved on-ice performance.

REFERENCE SIGNS LIST

1 tread
2 minute recess
3 water thickening material
3a water thickening material provided on inner surface of minute recess
3b water thickening material provided on inner surface of minute cavity
4 minute cavity
5 non-cavity portion

**Claims**

1. A rubber member comprising
   a water thickening material,
   wherein a plurality of minute recesses are formed on a surface of the rubber member,
   the water thickening material is provided on an inner surface of one or more minute recesses of the plurality of minute recesses,
   an average coverage of the water thickening material on the inner surface of the one or more minute recesses is 10 % or more, and
   the water thickening material satisfies a condition that, when an aqueous dispersion is prepared with a concentration of the water thickening material being 23 mass%, a viscosity of the aqueous dispersion at 25 °C and any shearing velocity of 0.01/s to 0.1/s measured by a cone-plate viscometer is 20 Pa·s or more.

2. The rubber member according to claim 1, wherein a plurality of minute cavities are formed inside the rubber member, the water thickening material is also provided on an inner surface of one or more minute cavities of the plurality of minute cavities, and
   the rubber member is obtainable using a rubber composition prepared by blending a rubber component with a foaming agent and water thickening material-containing organic fibers, the water thickening material-containing organic fibers containing the water thickening material and a resin.

3. The rubber member according to claim 1 or 2, wherein the water thickening material is a nanomaterial that has a major axis of less than 100 nm in the case of being non-fibrous or a minor axis length of less than 100 nm and a major axis length of less than 1000 nm in the case of being fibrous.

4. The rubber member according to any one of claims 1 to 3, wherein the water thickening material contains a hydroxyl group.

5. A rubber member comprising
   a nanomaterial that has a major axis of less than 100 nm in the case of being non-fibrous or a minor axis length of less than 100 nm and a major axis length of less than 1000 nm in the case of being fibrous,
   wherein a plurality of minute recesses are formed on a surface of the rubber member,
   the nanomaterial is provided on an inner surface of one or more minute recesses of the plurality of minute recesses, and
   an average coverage of the nanomaterial on the inner surface of the one or more minute recesses is 10 % or more.

**6.** The rubber member according to claim 5, wherein a plurality of minute cavities are formed inside the rubber member, the nanomaterial is also provided on an inner surface of one or more minute cavities of the plurality of minute cavities, and
the rubber member is obtainable using a rubber composition prepared by blending a rubber component with a foaming agent and nanomaterial-containing organic fibers, the nanomaterial-containing organic fibers containing the nanomaterial that has a major axis of less than 100 nm in the case of being non-fibrous or a minor axis length of less than 100 nm and a major axis length of less than 1000 nm in the case of being fibrous and a resin.

**7.** The rubber member according to any one of claims 1 to 6, wherein the water thickening material or the nanomaterial is provided on the inner surface of the one or more minute recesses by application, spray, or impregnation.

**8.** A method for producing the rubber member according to any one of claims 1 to 7, the method comprising providing the water thickening material or the nanomaterial in a minute recess formed on a surface of vulcanized rubber.

**9.** A tire comprising
a tread including the rubber member according to any one of claims 1 to 7.

# FIG. 1

# FIG. 2

# FIG. 3

# FIG. 4

FIG. 5

<div align="center">**INTERNATIONAL SEARCH REPORT**</div>

| International application No. |
| --- |
| PCT/JP2017/028136 |

### A. CLASSIFICATION OF SUBJECT MATTER

*C08J9/04*(2006.01)i, *B60C1/00*(2006.01)i, *C08J7/06*(2006.01)i, *C08K3/00* (2006.01)i, *C08K5/00*(2006.01)i, *C08L21/00*(2006.01)i, *C08L101/14*(2006.01)i

According to International Patent Classification (IPC) or to both national classification and IPC

### B. FIELDS SEARCHED

Minimum documentation searched (classification system followed by classification symbols)
C08J9/04, B60C1/00, C08J7/06, C08K3/00, C08K5/00, C08L21/00, C08L101/14

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2012-111799 A  (Bridgestone Corp.),<br>14 June 2012 (14.06.2012),<br>claims; paragraphs [0001] to [0007], [0027],<br>[0033] to [0045], [0073] to [0077], [0082] to<br>[0086]; tables 1 to 4; fig. 1<br>(Family: none) | 1,2,4,7,9<br>1-7,9<br>8 |
| Y<br>A | JP 2013-241566 A  (Sumitomo Rubber Industries,<br>Ltd.),<br>05 December 2013 (05.12.2013),<br>claims; paragraphs [0002] to [0010], [0025] to<br>[0026], [0036]; examples<br>& US 2013/0281610 A1<br>claims; paragraphs [0002] to [0009], [0024] to<br>[0025], [0036]; examples<br>& DE 102013207122 A1     & CN 103374150 A | 1-7,9<br>8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    22 September 2017 (22.09.17) | Date of mailing of the international search report<br>    10 October 2017 (10.10.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/028136

C (Continuation). DOCUMENTS CONSIDERED TO BE RELEVANT

| Category* | Citation of document, with indication, where appropriate, of the relevant passages | Relevant to claim No. |
|---|---|---|
| A | WO 97/34776 A1 (Bridgestone Corp.),<br>25 September 1997 (25.09.1997),<br>entire text<br>& US 6336487 B1<br>Whole Document<br>& EP 826522 A1 | 1-9 |
| A | JP 2008-260889 A (Bridgestone Corp.),<br>30 October 2008 (30.10.2008),<br>entire text<br>(Family: none) | 1-9 |
| A | JP 5940192 B1 (Shin-ei Kako Co., Ltd.),<br>29 June 2016 (29.06.2016),<br>entire text<br>& WO 2016/159081 A1<br>Whole Document | 1-9 |

Form PCT/ISA/210 (continuation of second sheet) (January 2015)

## REFERENCES CITED IN THE DESCRIPTION

**Patent documents cited in the description**

- JP 2014227487 A